# EUROPÄISCHE PATENTANMELDUNG

(11) **EP 1 925 517 A2**
(43) Veröffentlichungstag der Anmeldung: **28.05.2008**
(21) Anmeldenummer: 07117530.1
(22) Anmeldetag: 28.09.2007
(51) Int. Cl.: B60T 8/36, F16K 31/06

(54) **Magnetventil**

(30) Priorität: 27.11.2006 DE 102006055829
(71) Anmelder: ROBERT BOSCH GMBH, 70442 Stuttgart (DE)
(72) Erfinder: Brenndoerfer, Daniel, 74388, Talheim (DE)

(57) **Zusammenfassung**

Die Erfindung betrifft ein Magnetventil mit einem Ventilunterteil (10), in dem ein Hauptfluidkanal und ein Rückschlagfluidkanal verlaufen, wobei der Hauptfluidkanal mittels eines ersten Schließelements (14.1) schließbar ist, das dichtend mit einem Hauptventilsitz (17) zusammenwirkt und der Rückschlagfluidkanal mittels eines zweiten Schließelements (19) schließbar ist, das mit einem Rückschlagventilsitz (18) zusammenwirkt. Erfindungsgemäß sind der Hauptventilsitz (17) und der Rückschlagventilsitz (18) koaxial mit einem konstruktiv vorgegebenen Abstand zueinander angeordnet, wobei der Hauptventilsitz (17) von mindestens zwei Hauptvolumenteilströmen (12 bis 12.4) angeströmt ist, die jeweils in einem innerhalb des Ventilunterteils (10) angeordneten Hauptanströmkanal (15) geführt sind, und der Rückschlagventilsitz (18) von mindestens zwei Rückschlagvolumenteilströmen (13 bis 13.4) angeströmt ist, die jeweils in einem innerhalb des Ventilunterteils (10) angeordneten Rückschlaganströmkanal (16) geführt sind.

## Beschreibung

### Stand der Technik

Die Erfindung betrifft ein Magnetventil nach der Gattung des unabhängigen Patentanspruchs 1.

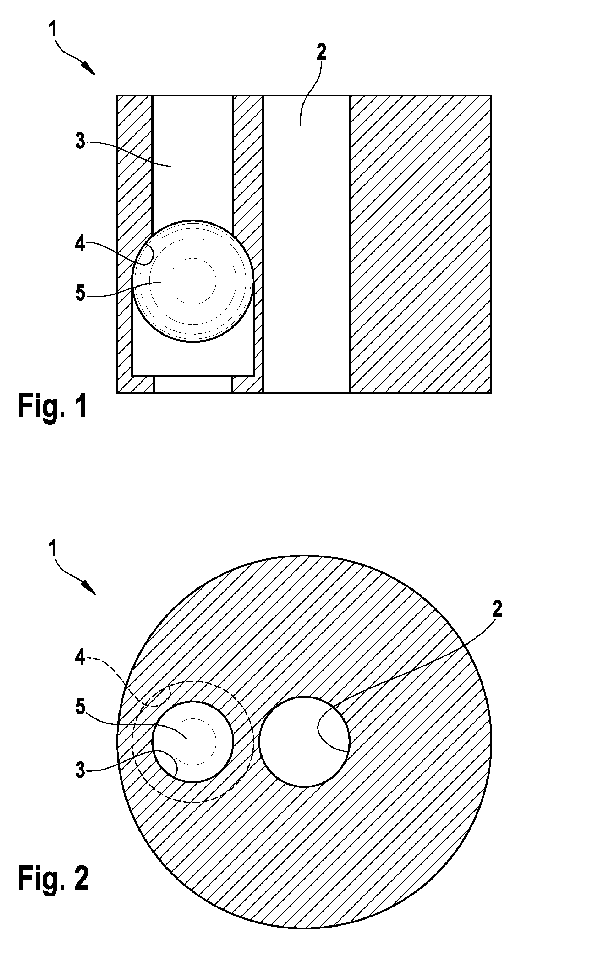

Ein Ventilunterteil eines herkömmlichen Magnetventils, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist schematisch in Fig. 1 und 2 dargestellt. Wie aus Fig. 1 und 2 ersichtlich ist, verlaufen im Ventilunterteil 1 des herkömmlichen Magnetventils ein Hauptfluidkanal 2 und ein Rückschlagfluidkanal 3. Der Hauptfluidkanal 2 kann mit einem nicht dargestellten ersten Schließelement geschlossen werden, das dichtend mit einem nicht dargestellten Hauptventilsitz zusammenwirkt. Der Rückschlagfluidkanal 3 kann mit einem zweiten Schließelement 5 geschlossen werden, das mit einem Rückschlagventilsitz 4 zusammenwirkt und während der Fertigung in das Ventilunterteil 1 eingeführt wird. Bei der momentanen Ventilentwicklung ergibt sich für das Ventilunterteil 1 zwischen der Position des Rückschlagventils bzw. des Rückschlagventilsitzes 4, dessen Durchmesser für einen geringeren Strömungswiderstand vergrößert werden soll, und der. Position und Anströmung des Hauptventilsitzes ein Zielkonflikt, dessen Durchmesser für einen geringeren Strömungswiderstand ebenfalls vergrößert werden soll, wobei die Außenabmessungen, insbesondere ein Außendurchmesser, des Ventilunterteils 1 aus Kostengründen identisch bzw. verringert werden sollen.

### Offenbarung der Erfindung

Das erfindungsgemäße Magnetventil mit den Merkmalen des unabhängigen Patentanspruchs 1 hat demgegenüber den Vorteil, dass der Hauptventilsitz und der Rückschlagventilsitz koaxial mit einem konstruktiv vorgegebenen Abstand zueinander angeordnet sind, wobei der Hauptventilsitz von mindestens zwei Hauptvolumenteilströmen angeströmt ist, die jeweils in einem innerhalb des Ventilunterteils angeordneten Hauptanströmkanal geführt sind, und der Rückschlagventilsitz von mindestens zwei Rückschlagvolumenteilströmen angeströmt ist, die jeweils in einem innerhalb des Ventilunterteils angeordneten Rückschlaganströmkanal geführt sind. Dies ermöglicht bei gleich bleibendem Außendurchmesser des Ventilunterteils deutlich größere Durchströmungsdurchmesser sowohl für den Hauptventilsitz und somit für einen Hauptvolumenstrom als auch für den Rückschlagventilsitz und somit für einen Rückschlagvolumenstrom, so dass die Strömungswiderstände in vorteilhafter Weise verkleinert werden können. Zum Schließen des Hauptfluidkanals wirkt ein erstes Schließelement dichtend mit dem Hauptventilsitz zusammen und zum Schließen des Rückschlagfluidkanals wirkt ein zweites Schließelement mit dem Rückschlagventilsitz zusammen. Der Abstand zwischen dem Hauptventilsitz und dem Rückschlagventilsitz ergibt sich aus dem erforderlichen Bauraum zur Anordnung und Trennung der Hauptanströmkanäle und der Rückschlaganströmkanäle innerhalb des Ventilunterteils.

Durch die in den abhängigen Ansprüchen aufgeführten Maßnahmen und Weiterbildungen sind vorteilhafte Verbesserungen des im unabhängigen Patentanspruch 1 angegebenen Magnetventils möglich.

Besonders vorteilhaft ist, dass der Hauptventilsitz und/oder der Rückschlagventilsitz im Ventilunterteil integriert sind, wodurch das Ventilunterteil neben der Strömungsführungsfunktion auch die Dichtfunktion für den Hauptvolumenstrom und/oder für den Rückschlagvolumenstrom übernimmt. Die Hauptanströmkanäle sind beispielsweise so ausgeführt, dass die mindestens zwei Hauptvolumenteilströme sternförmig zum Hauptvolumenstrom zusammengeführt sind und das erste Schließelement mittig und/oder symmetrisch anströmen. Zudem können die Rückschlaganströmkanäle so ausgeführt werden, dass die mindestens zwei Rückschlagvolumenteilströme sternförmig zu einem Rückschlagvolumenstrom zusammengeführt werden und das zweite Schließelement mittig und/oder symmetrisch anströmen.

In Ausgestaltung des erfindungsgemäßen Magnetventils liegen die Anzahl der Hauptvolumenteilströme und die Anzahl der Rückschlagvolumenteilströme im Bereich zwischen 2 bis 6, wobei die Anzahl der Hauptvolumenteilströme und die Anzahl der Rückschlagvolumenteilströme gleich oder verschieden sein kann. Das Ventilunterteil kann beispielsweise als Kunststoffspritzteil ausgeführt werden, wobei die Hauptanströmkanäle und die Rückschlaganströmkanäle während des Herstellungsvorgangs durch seitliche Einschübe umgesetzt werden. Zudem können der in das Ventilunterteil integrierte Hauptventilsitz und/oder der in das Ventilunterteil integrierte Rückschlagventilsitz aus einem härteren Material als das Ventilunterteil gefertigt werden.

In weiterer Ausgestaltung des erfindungsgemäßen Magnetventils ist das Ventilunterteil so in ein anderes Bauelement eingebettet, dass das Bauelement mindestens eine Wand des mindestens einen Hauptanströmkanals und des mindestens einen Rückschlaganströmkanals bildet. Das Bauelement zur Aufnahme des Ventilunterteils ist beispielsweise ein Fluidaggregat und/oder ein Ventilgehäuse und/oder ein Ventileinsatz.

Vorteilhafte, nachfolgend beschriebene Ausführungsformen der Erfindung sowie das zu deren besserem Verständnis oben erläuterte, herkömmliche Ausführungsbeispiel sind in den Zeichnungen dargestellt. In den Zeichnungen bezeichnen gleiche Bezugszeichen Komponenten bzw. Elemente, welche gleiche bzw. analoge Funktionen ausführen.

### Kurze Beschreibung der Zeichnungen

Fig. 1 zeigt eine schematische Längsschnittdarstellung eines Ventilunterteils eines herkömmlichen Magnetventils.
Fig. 2 zeigt eine schematische Querschnittdarstellung des Ventilunterteils gemäß Fig. 1.
Fig. 3 zeigt eine schematische perspektivische Schnittdarstellung der erfindungswesentlichen Komponenten eines erfindungsgemäßen Magnetventils.
Fig. 4 zeigt eine schematische perspektivische Schnittdarstellung eines Ventilunterteils aus Fig. 3.
Fig. 5 bis 8 zeigen jeweils eine schematische Darstellung eines Ventilunterteils mit mehreren Hauptfluidkanälen und Rückschlagfluidkanälen für ein erfindungsgemäßes Magnetventil.

### Ausführungsformen der Erfindung

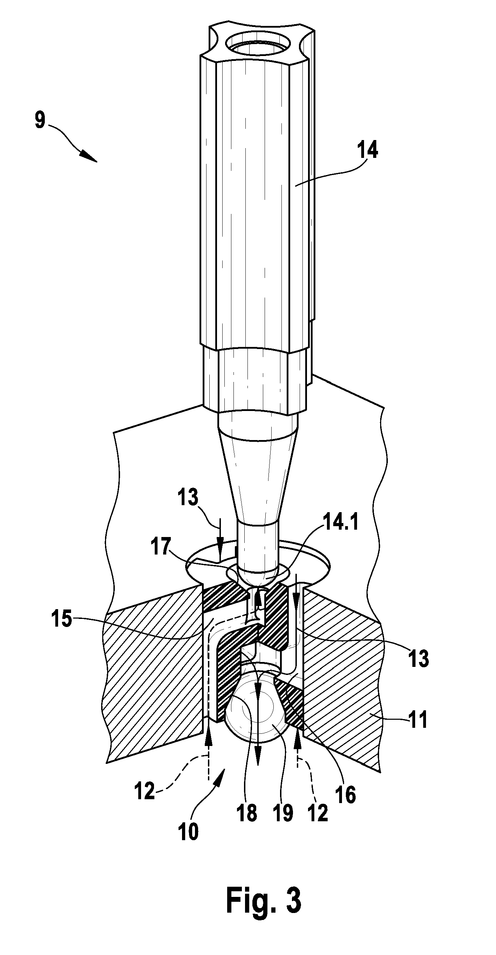

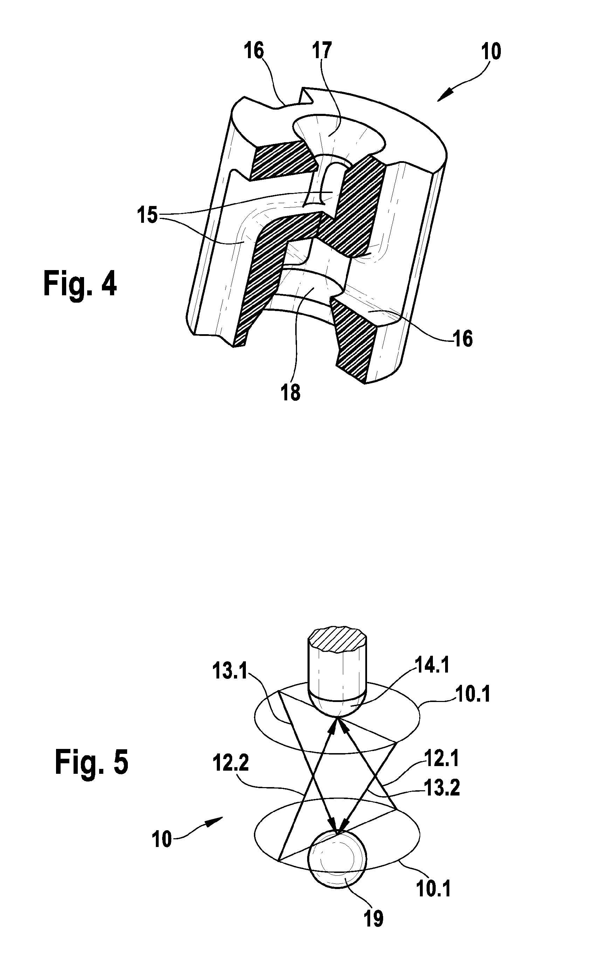

Wie aus Fig. 3 und 4 ersichtlich ist, umfasst ein dargestelltes erstes Ausführungsbeispiel eines erfindungsgemäßen Magnetventils 9 als erfindungswesentliche Komponenten einen Stößel 14 mit einem ersten Schließelement 14.1 und ein Ventilunterteil 10. Innerhalb des Ventil unterteils 10 sind ein Hauptventilsitz 17 und ein Rückschlagventilsitz 18 koaxial mit einem konstruktiv vorgegebenen Abstand angeordnet. Zudem verlaufen innerhalb des Ventilunterteils zwei Hauptanströmkanäle 15, in denen jeweils ein Hauptvolumenteilstrom 12 geführt wird, und zwei Rückschlaganströmkanäle 16, in denen jeweils ein Rückschlagvolumenteilstrom 13 geführt wird. Im dargestellten Ausführungsbeispiel sind sowohl der der Hauptventilsitz 17 als auch der der Rückschlagventilsitz 18 im Ventilunterteil 10 integriert, so dass das Ventilunterteil neben der Strömungsführungsfunktion auch die Dichtfunktion für einen Hauptvolumenstrom und für einen Rückschlagvolumenstrom übernimmt. Bei alternativen nicht dargestellten Ausführungsformen der Erfindung können der Hauptventilsitz 17 und/oder der Rückschlagventilsitz 18 außerhalb des Ventilunterteils 10 in einem anderen Bauelement integriert werden, wobei der Hauptventilsitz 17 beispielsweise in einem Bauelement integriert wird, das oberhalb des Ventilunterteils angeordnet ist, und der Rückschlagventilsitz 18 kann beispielsweise in einem Bauelement integriert werden, das unterhalb des Ventilunterteils angeordnet ist. In Abhängigkeit von der Ausführungsform kann das Ventilunterteil dann nur die Strömungsführungsfunktion für den Hauptvolumenstrom und den Rückschlagvolumenstrom übernehmen, oder das Ventilunterteil kann zusätzlich zur Strömungsführungsfunktion für den Hauptvolumenstrom und den Rückschlagvolumenstrom auch die Dichtfunktion für den Hauptvolumenstrom oder den Rückschlagvolumenstrom übernehmen.

Wie weiter aus Fig. 3 und 4 ersichtlich ist, sind die Hauptanströmkanäle 15 so ausgeführt, dass die zwei Hauptvolumenteilströme 12 vor dem Hauptventilsitz 17 sternförmig zum Hauptvolumenstrom zusammengeführt sind und das erste Schließelement 14.1 mittig und symmetrisch anströmen. Die Rückschlaganströmkanäle 16 sind so ausgeführt, dass die zwei Rückschlagvolumenteilströme 13 vor dem Rückschlagventilsitz 18 sternförmig zum Rückschlagvolumenstrom zusammengeführt sind und das zweite Schließelement 19 mittig und symmetrisch anströmen. Der Hauptventilsitz 17 kann mit dem ersten Schließelement 14.1 geschlossen werden, das dichtend mit dem Hauptventilsitz 17 zusammenwirkt, wenn der Stößel 14 in Richtung Hauptventilsitz 17 bewegt wird. Der Stößel 14 kann beispielsweise durch einen nicht dargestellten Anker in Richtung Hauptventilsitz bewegt werden, der beispielsweise durch eine Magnetkraft bewegt wird, die bei Bestromung durch eine nicht dargestellte Magnetbaugruppe erzeugt wird. Der Rückschlagventilsitz 18 kann mit dem zweiten Schließelement 19 geschlossen werden, das mit dem Rückschlagventilsitz 18 zusammenwirkt. In Ausgestaltung des Rückschlagventils drückt ein erster Volumenstrom, der in eine erste Richtung fließt, das zweite Schließelement 19 dichtend in den Rückschlagventilsitz 18, wobei der erste Volumenstrom in dem in Fig. 3 dargestellten Ausführungsbeispiel von unten nach oben fließt und vom ersten Schließelement 14.1 geregelt ist, das mit dem Hauptventilsitz 17 zusammenwirkt. Ein zweiter Volumenstrom, der im Bezug auf den ersten Volumenstrom in die entgegengesetzte Richtung fließt, d.h. der Rückschlagvolumenstrom, drückt das zweite Schließelement 19 aus dem Rückschlagventilsitz 18 und öffnet den Rückschlagventilsitz 18.

Das dargestellte Ventilunterteil 10 ist beispielsweise als Kunststoffspritzteil ausgeführt, wobei die Hauptanströmkanäle 15 und die Rückschlaganströmkanäle 16 während des Herstellungsvorgangs durch seitliche Einschübe umgesetzt werden. Zudem können der in das Ventilunterteil 10 integrierte Hauptventilsitz 17 und/oder der in das Ventilunterteil 10 integrierte Rückschlagventilsitz 18 aus einem härteren Material als das Ventilunterteil 10 hergestellt werden. Das Ventilunterteil 10 ist im dargestellten Ausführungsbeispiel so in ein Fluidaggregat 11 eingebettet, dass das Fluidaggregat 11 jeweils eine Wand der Hauptanströmkanäle 15 und der Rückschlaganströmkanäle 16 bildet. Im Gegensatz zum herkömmlichen Ventilunterteil 1 gemäß Fig. 1 und 2 muss das zweite Schließelement 19 für den Rückschlagventilsitz 18 nicht während der Fertigung in das Ventilunterteil 10 eingeführt werden. Bei einem nicht dargestellten Ausführungsbeispiel kann das Ventilunterteil 10 alternativ in einem als Hülse ausgeführtem Ventilgehäuse oder einem Ventileinsatz eingebettet werden.

Die Anzahl der Hauptvolumenteilströme 12 und die Anzahl der Rückschlagvolumenteilströme 13 können im Bereich zwischen 2 bis 6 liegen, wobei die Anzahl der Hauptvolumenteilströme 12 und die Anzahl der Rückschlagvolumenteilströme 13 gleich oder verschieden sein kann.

Fig. 5 zeigt eine schematische Darstellung des ersten Ausführungsbeispiels, das oben unter Bezugnahme auf Fig. 3 und 4 beschrieben ist. Somit weist das schematisch dargestellte erste Ausführungsbeispiel des erfindungsgemäßen Ventilunterteils 10 zwei Hauptvolumenteilströme 12.1 und 12.2 und zwei Rückschlagventilteilströme 13.1 und 13.2 auf, wobei das Ventilunterteil einen Außendurchmesser 10.1 aufweist, der dem Außendurchmesser des herkömmlichen Ventilunterteils 1 aus Fig. 1 und 2 entspricht. Wie weiter aus Fig. 5 ersichtlich ist, strömen die Hauptvolumenteilströme 12.1 und 12.2 das erste Schließelement 14.1 mittig und symmetrisch von unten an, wobei das erste Schließelement 14.1 beispielsweise als kugelförmige Dichtkalotte ausgeführt ist. Die Rückschlagventilteilströme 13.1 und 13.2 strömen das beispielsweise als Kugel ausgeführte zweite Schließelement 19 mittig und symmetrisch von oben an.

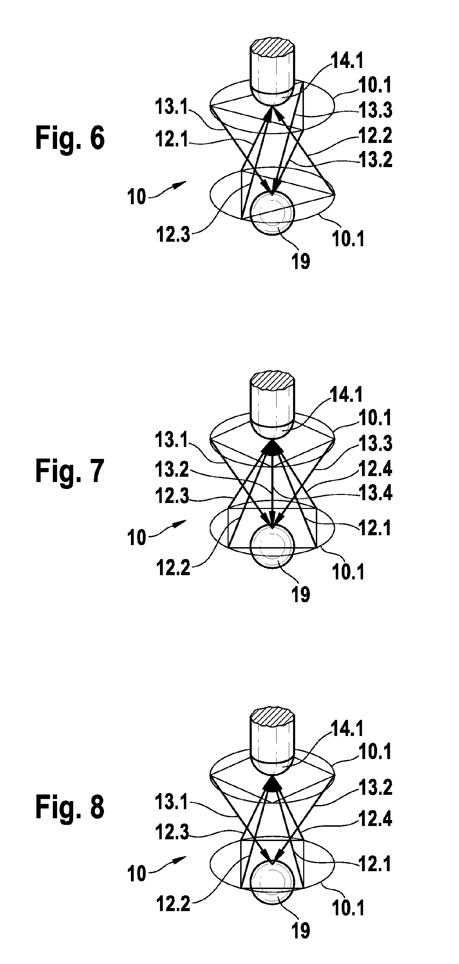

Fig. 6 zeigt eine schematische Darstellung eines zweiten Ausführungsbeispiels des erfindungsgemäßen Ventilunterteils 10, das drei Hauptvolumenteilströme 12.1. 12.2 und 12.3 und drei Rückschlagventilteilströme 13.1, 13.2 und 13.3 aufweist. Analog zum ersten Ausführungsbeispiel weist das Ventilunterteil 10 einen Außendurchmesser 10.1 auf, der dem Außendurchmesser des herkömmlichen Ventilunterteils 1 aus Fig. 1 und 2 entspricht. Wie weiter aus Fig. 6 ersichtlich ist, strömen die Hauptvolumenteilströme 12.1, 12.2 und 12.3 das erste Schließelement 14.1 mittig und symmetrisch von unten an. Die Rückschlagventilteilströme 13.1. 13.2 und 13.3 strömen das zweite Schließelement 19 mittig und symmetrisch von oben an.

Fig. 7 zeigt eine schematische Darstellung eines dritten Ausführungsbeispiels des erfindungsgemäßen Ventilunterteils 10, das vier Hauptvolumenteilströme 12.1, 12.2, 12.3 und 12.4 und vier Rückschlagventilteilströme 13.1, 13.2, 13.3 und 13.4 aufweist. Analog zum ersten und zweiten Ausführungsbeispiel weist das Ventilunterteil 10 einen Außendurchmesser 10.1 auf, der dem Außendurchmesser des herkömmlichen Ventilunterteils 1 aus Fig. 1 und 2 entspricht. Wie weiter aus Fig. 7 ersichtlich ist, strömen die Hauptvolumenteilströme 12.1, 12.2, 12.3 und 12.4 das erste Schließelement 14.1 mittig und symmetrisch von unten an. Die Rückschlagventilteilströme 13.1, 13.2, 13.3 und 13.4 strömen das zweite Schließelement 19 mittig und symmetrisch von oben an.

Fig. 8 zeigt eine schematische Darstellung eines vierten Ausführungsbeispiels des erfindungsgemäßen Ventilunterteils 10, das vier Hauptvolumenteilströme 12.1. 12.2, 12.3 und 12.4 und zwei Rückschlagventilteilströme 13.1 und 13.2 aufweist. Analog zu den anderen Ausführungsbeispielen weist das Ventilunterteil 10 einen Außendurchmesser 10.1 auf, der dem Außendurchmesser des herkömmlichen Ventilunterteils 1 aus Fig. 1 und 2 entspricht. Wie weiter aus Fig. 8 ersichtlich ist, strömen die Hauptvolumenteilströme 12.1, 12.2, 12.3 und 12.4 das erste Schließelement 14.1 mittig und symmetrisch von unten an. Die Rückschlagventilteilströme 13.1 und 13.2 strömen das zweite Schließelement 19 mittig und symmetrisch von oben an.

Das erfindungsgemäße Magnetventil ermöglicht bei gleich bleibendem Außendurchmesser des Ventilunterteils deutlich größere Durchströmungsdurchmesser sowohl für den Hauptventilsitz als auch für den Rückschlagventilsitz, so dass die Strömungswiderstände in vorteilhafter Weise verkleinert werden können. Zudem können die Hauptvolumenanströmkanäle so ausgeführt werden, dass die Anströmung des Hauptsitzes absolut symmetrisch ist.

Das erfindungsgemäße Magnetventil kann beispielsweise in Fluidbaugruppen verwendet werden, die in einem Antiblockiersystem (ABS) oder einem Antriebsschlupfregelsystem (ASR-System) oder einem elektronischen Stabilitätsprogrammsystem (ESP-System) eingesetzt werden.

## Patentansprüche

1. Magnetventil mit einem Ventilunterteil (10), in dem ein Hauptfluidkanal und ein Rückschlagfluidkanal verlaufen, wobei der Hauptfluidkanal mittels eines ersten Schließelements (14.1) schließbar ist, das dichtend mit einem Hauptventilsitz (17) zusammenwirkt und der Rückschlagfluidkanal mittels eines zweiten Schließelements (19) schließbar ist, das mit einem Rückschlagventilsitz (18) zusammenwirkt, **dadurch gekennzeichnet, dass** der Hauptventilsitz (17) und der Rückschlagventilsitz (18) koaxial mit einem konstruktiv vorgegebenen Abstand zueinander angeordnet sind, wobei der Hauptventilsitz (17) von mindestens zwei Hauptvolumenteilströmen (12 bis 12.4) angeströmt ist, die jeweils in einem innerhalb des Ventilunterteils (10) angeordneten Hauptanströmkanal (15) geführt sind, und der Rückschlagventilsitz (18) von mindestens zwei Rückschlagvolumenteilströmen (13 bis 13.4) angeströmt ist, die jeweils in einem innerhalb des Ventilunterteils (10) angeordneten Rückschlaganströmkanal (16) geführt sind.

2. Magnetventil nach Anspruch 1, **dadurch gekennzeichnet, dass** der Hauptventilsitz (17) und/oder der Rückschlagventilsitz (18) im Ventilunterteil (10) integriert sind.

3. Magnetventil nach Anspruch 1 oder 2, **dadurch gekennzeichnet, dass** die Hauptanströmkanäle (15) so ausgeführt sind, dass die mindestens zwei Hauptvolumenteilströme (12 bis 12.4) sternförmig zu einem Hauptvolumenstrom zusammengeführt sind und das erste Schließelement (14.1) mittig und/oder symmetrisch anströmen.

4. Magnetventil nach einem der Ansprüche 1 bis 3, **dadurch gekennzeichnet, dass** die Rückschlaganströmkanäle (16) so ausgeführt sind, dass die mindestens zwei Rückschlagvolumenteilströme (13 bis 13.4) sternförmig zu einem Rückschlagvolumenstrom zusammengeführt sind und das zweite Schließelement (19) mittig und/oder symmetrisch anströmen.

5. Magnetventil nach einem der Ansprüche 1 bis 4, **dadurch gekennzeichnet, dass** die Anzahl der Hauptvolumenteilströme (12 bis 12.4) und die Anzahl der Rückschlagvolumenteilströme (13 bis 13.4) im Bereich zwischen 2 bis 6 liegen, wobei die Anzahl der Hauptvolumenteilströme (12 bis 12.4) und die Anzahl der Rückschlagvolumenteilströme (13 bis 13.4) gleich oder verschieden ist.

6. Magnetventil nach einem der Ansprüche 1 bis 5, **dadurch gekennzeichnet, dass** das Ventilunterteil (10) als Kunststoffspritzteil ausgeführt ist, wobei die Hauptanströmkanäle (15) und die Rückschlaganströmkanäle (16), während des Herstellungsvorgangs durch seitliche Einschübe umsetzbar sind.

7. Magnetventil nach Anspruche 6, **dadurch gekennzeichnet, dass** der in das Ventilunterteil (10) integrierte Hauptventilsitz (17) und/oder der in das Ventilunterteil (10) integrierte Rückschlagventilsitz (18) aus einem härteren Material als das Ventilunterteil (10) gefertigt sind.

8. Magnetventil nach einem der Ansprüche 1 bis 7, **dadurch gekennzeichnet, dass** das Ventilunterteil (10) so in ein anderes Bauelement (11) eingebettet ist, dass das Bauelement (11) mindestens eine Wand des mindestens einen Hauptanströmkanals (15) und des mindestens einen Rückschlaganströmkanals (16) bildet.

9. Magnetventil nach Anspruche 8, **dadurch gekennzeichnet, dass** das andere Bauelement (11) ein Fluidaggregat und/oder eine Ventilgehäuse ist.
